# EUROPÄISCHE PATENTANMELDUNG

(11) **EP 0 535 418 A1**
(43) Veröffentlichungstag der Anmeldung: **07.04.1993**
(21) Anmeldenummer: 92115485.2
(22) Anmeldetag: 10.09.1992
(51) Int. Cl.: A61C 5/06

(54) **Mischkapsel für Dental-Amalgam**

(30) Priorität: 20.09.1991 EP 91116018; 11.12.1991 DE 9115334 U; 23.04.1992 DE 9205492 U
(71) Anmelder: Ihde, Stefan, Dr., CH-8738 Uetliburg (CH)
(72) Erfinder: Ihde, Stefan, Dr., CH-8738 Uetliburg (CH)

(57) **Zusammenfassung**

Es wird eine Mischkapsel für Dental-Amalgam aus Glas, Keramik oder Glaskeramik beschrieben, die nach dem Mischvorgang leicht geöffnet und dekontaminiert werden kann. Sie besteht aus zwei Teilen (20,21), die entlang ihrer Teilungsfuge (22) lösbar miteinander verbunden sind, insbesonders mit einem lösbaren mechanischen Haltemittel (40).

## Beschreibung

Die Erfindung betrifft eine Mischkapsel für Dental-Amalgam mit einem länglichen, insbesondere zur Längsachse rotationssymmetrischen, Mischraumkörper aus hitzebeständigem Material wie Glas. Glaskeramik oder Keramik, in dessen Mischraum einerseits Quecksilber innerhalb eines Folienbehälters sowie andererseits die übrigen Mischungsbestandteile untergebracht sind.

Die die verschiedenen Mischungsbestandteile einer bestimmten Menge von Dental-Amalgam enthaltenden Mischkapseln haben sich als Arbeitserleichterung für den applizierenden Zahnarzt eingeführt. Durch Vibrationsbehandlung der Kapsel läßt sich der Folienbehälter öffnen und das austretende Quecksilber mit den pulverförmig vorliegenden anderen Mischungsbestandteilen zu Amalgam von gewünschter Konsistenz vermischen. Die Mischkapsel wird alsdann geöffnet und das Amalgam entnommen.

Im allgemeinen bestehen derartige Mischkapseln aus Kunststoff, weil diese besonders kostengünstig herstellbar und vorteilhaft handhabbar sind. Es hat sich jedoch gezeigt, daß ein Problem in der Entsorgung solcher Mischkapseln besteht. Denn die Kapseln sind naturgemäß mit Quecksilber kontaminiert. Da eine Trennung des Kapsel-Kunststoffes von den Verunreinigungen nicht möglich ist, müssen gebrauchte Kapseln in aufwendiger Weise als Sondermüll behandelt werden. Stellt man hingegen den Mischraumkörper aus Glas her (DE-GM 90 13 328), dann gibt es dieses Problem nicht:
Wegen der hohen thermischen Widerstandsfähigkeit von Glas lassen sich mit Quecksilber kontaminierte Glas-Mischraumkörper so hoch erhitzen, daß das Quecksilber verdampft. Während letzteres in geeigneter Weise gesammelt werden kann, wird das gereinigte Glas der Wiederverwendung zugeführt. Allerdings bringt ein gläserner Mischraumkörper ein anderes Problem mit sich, nämlich wenn er nach erfolgter Amalgambildung durch Abbrechen an einer Sollbruchstelle geöffnet werden soll: Es besteht die Gefahr, daß beim Abbrechen störende Glassplitter entstehen. Außerdem kann das gereinigte Material des Mischraumkörpers nur durch Einschmelzen wiederverwendet werden.

Der Erfindung liegt daher die Aufgabe zugrunde, eine Mischkapsel der genannten Art anzugeben, deren Mischraumkörper der besseren Entsorgbarkeit wegen aus Glas oder dergleichen besteht, die nach dem Mischvorgang ohne Entstehen von Glas- oder sonstigen Splittern so geöffnet werden kann, daß das fertige Amalgam unschwer zu entnehmen und die Mischkapsel nach Reinigung wiederzuverwenden ist.

Diese Aufgabe wird nach der Erfindung dadurch gelöst, daß der Mischraumkörper aus zwei Teilen besteht, die entlang ihrer senkrecht zur Längsachse des Mischraumkörpers verlaufenden Teilungsfuge miteinander verbunden sind.

Vorzugsweise sind die beiden Teile an ihrer Teilungsfuge durch ein Dichtmittel gegeneinander abgedichtet.

Weiterhin kann es von Vorteil sein, wenn die beiden Teile der Mischkapsel durch lösbare Haltemittel mechanisch in fester Position zueinander zusammengehalten sind.

Bei dieser vorteilhaften Ausgestaltung werden während des Mischvorganges die beiden Teile des Mischraumkörpers durch die Haltemittel mechanisch gehalten, während die Dichtmittel dafür sorgen, daß das inzwischen aus dem Folienbehälter ausgetretene Quecksilber nicht nach außen gelangt. Nach Abschluß des Mischvorganges werden die mechanischen Haltemittel gelöst, und das Mischgut wird entnommen. Die beiden Teile des Mischraumkörpers können nun durch Erhitzen von Quecksilberresten befreit werden, so daß sie -gegebenenfalls nach weiteren Reinigungsvorgängenwiederverwendet werden können, und zwar ohne die Notwendigkeit des Wiedereinschmelzens und Neuherstellung.

Das Dichtmittel für die erfindungsgemäße Mischkapsel kann gemäß einer vorteilhaften Ausführungsform derart gestaltet sein, daß die beiden Teile an ihrer Teilungsfuge durch aufeinander eingeschliffene Berührungsflächen gegeneinander abgedichtet sind. Diese Lösung hat den Vorteil, daß nach dem öffnen der Mischkapsel nach erfolgtem Mischvorgang beide Teile vom kontaminierenden Quecksilber auf einfache Weise befreit werden können, ohne daß besondere Dichtungsteile zur Entsorgung übrigbleiben. Die Herstellung genauer, eingeschliffener Berührungsflächen ist jedoch mit einem höheren Aufwand verbunden. Es ist daher auch möglich, die beiden Teile an ihrer Teilungsfuge durch eine gesonderte Dichtung gegeneinander abzudichten, so daß es also nicht erforderlich ist, die Berührungsflächen an der Teilungsfuge präzise zu fertigen. Da die an der Teilungsfuge liegende Dichtung erst während des Mischvorganges mit dem aus dem Folienbehälter in den Mischraum eintretenden Quecksilber in Berührung kommt, ist die Kontaminierung solcher Dichtungen nur gering. Durch entsprechende konstruktive Ausbildung der Dichtung ist es auch möglich, daß nur ein geringer Teil der Dichtungsfläche mit Quecksilber in Berührung kommt.

Eine zweckmäßige Ausführungsform der erfindungsgemäßen Mischkapsel ist dadurch gekennzeichnet, daß die beiden Teile als zwei etwa gleich große, an einem Ende offene Behälter ausgebildet und an den offenen Stirnseiten unter Bildung einer umlaufenden Teilungsfuge auf Stoß zusammengesetzt sind. Eine andere vorteilhafte Ausführungsform ist dadurch gekennzeichnet, daß das erste Teil als einseitig offener Behälter ausgebildet ist, in dessen Öffnung ein Stopfen als zweites Teil eingesetzt ist. Anstelle des Stopfens kann auch ein stirnseitig aufliegender Deckel vorgesehen sein, der die stirnseitige Öffnung des Behälters verschließt.

Das Haltemittel zum mechanischen Zusammenhalten der beiden Teile der Mischkapsel kann gemäß einer einfachen Ausführungsform aus einer den Bereich der Teilungsfuge zwischen den beiden Teilen übergreifende Folie, oder ein entsprechender Haltering, sein. Es ist aber auch möglich, statt dessen eine den gesamten Mischraumkörper umfassende Folie, insbesondere Schrumpffolie, vorzusehen. Eine weitere Variante besteht darin, als mechanisches Haltemittel eine den Bereich der Teilungsfuge zwischen den beiden Teilen überspannende, gummielastische Raupe vorzusehen. Diese Raupe muß nur punktuell aufgebracht sein, wenn ein gesondertes Dichtungsmittel verwendet wird, wie z.B. aufeinander eingeschliffene Flächen an der Teilungsfuge, oder eine eingelegte Dichtung. Es ist aber auch möglich, die im Bereich der Teilungsfuge vorgesehene Raupe vollflächig aufzubringen, so daß sie neben ihrer Funktion als mechanisches Haltemittel auch gleichzeitig die des Dichtungsmittels übernimmt. Schließlich besteht eine weitere Möglichkeit darin, die beiden Teile miteinander zu verschrauben, um sie mechanisch in fester Position zueinander zu halten.

Um einen besonders festen und sicheren Sitz des Haltemittels zu ermöglichen, ist gemäß einer weiteren Ausgestaltung der Erfindung mindestens das erste Teil an seinem an der Teilungsfuge liegenden Rand auf der Außenseite mit einem umlaufenden Wulst, einer umlaufenden Rille oder mit punktuellen Ansätzen oder Vertiefungen versehen. Durch diesen Wulst, durch die umlaufende Rille oder die punktuellen Ansätze oder Vertiefungen ist eine die Mischkapsel nur teilweise überziehende Folie, oder ein entsprechender Haltering, besser gesichert und in der Lage, die beiden Teile fest in der gegenseitigen Position zu halten.

Eine weitere Maßnahme zur Verbesserung der mechanischen Halterung besteht darin, daß der Innenraum des Mischraumkörpers unter Unterdruck gehalten wird, so daß die an der Teilungsfuge aufeinanderliegenden Berührungsflächen der beiden Teile fest aufeinander gepreßt werden. Auf eine mechanische Halterung kann bei dieser Ausführungsform gegebenenfalls auch verzichtet werden.

Unter bestimmten Umständen, d.h. für bestimmte Materialien des Mischguts, ist es auch möglich, als zweites Teil einen flexiblen Metalldeckel vorzusehen, der auf dem ersten Teil von außen umgebördelt ist und hierdurch beide Teile fest zueinander haltert. Zum leichteren Öffnen ist ein solcher Metalldeckel vorzugsweise mit einer Aufreißlasche versehen, Die Dichtung für eine solche Mischkapsel kann aus einer im Randbereich des Metalldeckels aufgespritzten Dichtmasse bestehen, die den Metalldeckel gegenüber dem ersten Teil abdichtet. Es ist jedoch auch möglich, nach der Umbördelung des Metalldeckels im Übergangsbereich der Umbördelung zum ersten Teil von außen eine Dichtmasse aufzuspritzen.

Vorteilhaft ist es auch, die beiden Teile der Mischkapsel miteinander zu verkleben. Diese Verklebung kann nach dem Mischvorgang beispielsweise durch Wärme- oder Lichtbestrahlung weitgehend wieder gelöst werden.

Insbesondere hat es sich gezeigt, daß hochfeste, jedoch wasserlösliche Klebstoffe eine solche Verbindung sehr gut herstellen können. Vor allem in Kombination mit einer Schutzfolie, die frühzeitigen oder ungewollten Wasserzutritt an der Klebestelle verhindert, sind diese Kleber gut einsetzbar. Unmittelbar nach dem Anmischen des Amalgams in der Kapsel wird die Folie entfernt und die Kapsel beispielsweise kurz unter einen Wasserstrahl gehalten.

Die Verwendung solcher wasserlöslicher Kleber bieten insbesondere auch den Vorteil, daß die Trennung des Klebers vom Glas zum Zwecke der Entsorgung und des Recycling besser möglich ist, als bei einem Kleber auf normaler Methacrylat- oder Cyanatbasis.

Als besonders geeignet erweisen sich wasserlösche Klebstoffe, wie sie in der DE-OS 41 26 336 beschrieben werden, sowie deren Abwandlungen. Die Schutzfolie über der Klebeverbindung sichert ab, daß sich zu früh Wasser, z.B. aus der Luft, in der Klebeverbindung anreichert und die Kapsel während des Mischens aufbricht.

Weitere vorteilhafte Ausgestaltungen der Erfindung sind den Unteransprüchen zu entnehmen.

Der Mischraumkörper kann außer rotationssymmetrischen Formen auch andere Formen aufweisen, beispielsweise eine ovale Form.

Die Erfindung wird nachfolgend anhand von mehreren Ausführungsbeispielen näher erläutert:

Es zeigen:
- Fig. 1: eine erste Ausführungsform einer Mischkapsel, bestehend aus einem röhrchenförmigen Behälter, der durch einen Stopfen verschlossen ist;
- Fig. 2: eine ähnliche Ausführungsform wie die nach Fig.1, jedoch mit einer gesonderten Dichtung und einer den Mischraumkörper allseitig umschließenden Folie;
- Fig. 3: eine Mischkapsel, bestehend aus zwei topfförmigen Behältern gleicher Größe;
- Fig. 4: eine Mischkapsel, ähnlich der nach Fig. 2;
- Fig. 5: eine Mischkapsel mit einem röhrchenförmigen Behälter und einem stirnseitig aufliegenden Deckel;
- Fig. 6: eine Ausführungsform ähnlich der Fig. 5, jedoch mit einem den Rand des Behälters übergreifenden Deckel;
- Fig. 7: eine Ausführungsform mit einem röhrchenförmigen Behäler und einem eingeschraubten Stopfen; und
- Fig. 8: eine Ausführungsform mit einem röhrchenförmigen Behälter und einem umgebördelten Metalldeckel.

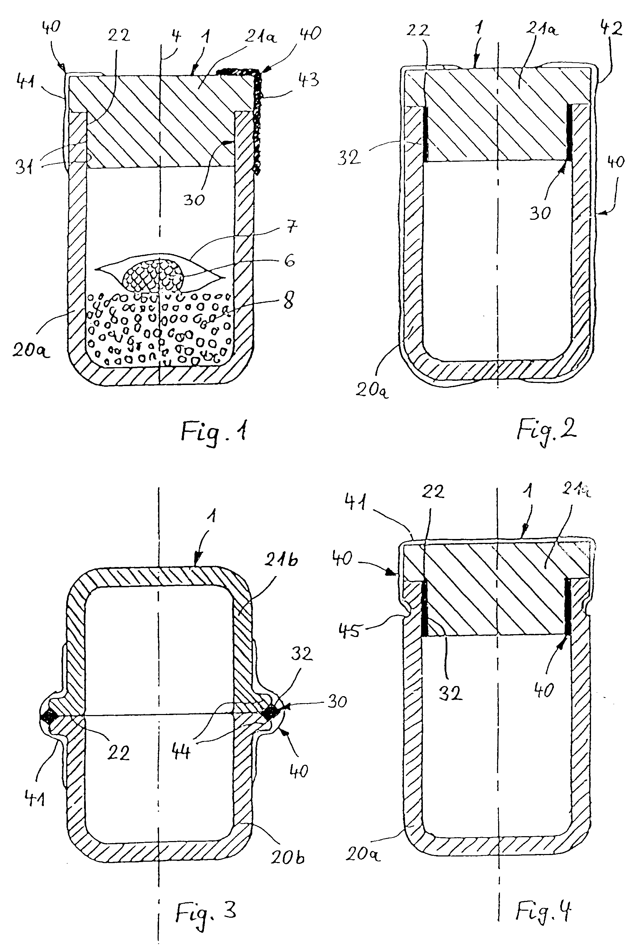

Alle in den Fig. 1 bis 8 dargestellten Ausführungsformen der erfindungsgemäßen Mischkapsel für Dental-Amalgam enthalten einen zur Längsachse 4 beispielsweise rotationssymmetrischen Mischraumkörper 1, der in verschiedenen Varianten aus zwei Teilen 20, 21 besteht, mit einer an einer senkrecht zur Längsachse 4 des Mischraumkörpers verlaufenden Teilungsfuge 22, die durch ein Dichtmittel 30 gegeneinander abgedichtet sind. Beide Teile 20, 21 sind durch lösbare Haltemittel 40 mechanisch in fester Position zueinander gehalten. In den verschiedenen Ausführungsformen sind die vorstehend und in den Ansprüchen genannten Bezugszeichen bei den ersten und zweiten Teilen 20, 21 mit Zusatzbuchstaben versehen, bzw. die Dichtmittel 30 und die Haltemittel 40 werden in den einzelnen Ausführungsbeispielen mit Zahlen der jeweiligen Dekade 30 bzw. 40 näher spezifiziert.

In der Ausführungsform nach Fig. 1 besteht der Mischraumkörper 1 aus einem ersten Teil in der Form einen röhrchenförmigen Behälters 20a, der durch einen Stopfen 21a als zweitem Teil verschlossen ist. Das Dichtmittel (allgemein 30) in diesem Ausführungsbeispiel wird dadurch gebildet, daß die Berührungsflächen 31 zwischen dem Behälter 20a und dem Stopfen 21a genau aufeinander eingeschliffen sind. Hierdurch wird eine Teilungsfuge 22 ohne Verwendung eines zusätzlichen Dichtungsmaterials dampfdicht überbrückt.

Zusätzlich ist in Fig. 1 zu sehen, daß im unteren Teil des Behälters 20a Mischungsbestandteile 8 vorgesehen sind, die mit dem in einem Folienbehälter 7 dicht eingeschweißten Quecksilber 6 gemischt werden sollen. Hierzu wird die Mischkapsel in an sich bekannter Weise einer Vibrationsbehandlung ausgesetzt, wodurch der Folienbehälter 7 zerstört wird und das Quecksilber 6 mit den Mischungsbestandteilen 8 reagieren kann und sich mit diesem zu Dental-Amalgam verbindet.

Während das Dichtmittel 30 an der Teilungsfuge 22 durch die aufeinander eingeschliffenen Berührungsflächen 31 realisiert ist, wird das Haltemittel 40 dadurch gebildet, daß der Mischraumkörper 1 im Bereich der Teilungsfuge 22 mit einer Folie 41 überzogen (linker Teil der Fig. 1), die dafür sorgt, daß der Stopfen 21a sich nicht unbeabsichtigt vom Behälter 20a löst.

Im rechten Teil der Fig. 1 ist eine Alternativform des Haltemittels 40 gezeigt, d.h., Stopfen 21a und Behälter 20a sind durch eine die Teilungsfuge 22 überbrückende Raupe 43 aus gummielastischem Material überbrückt, das verhältnismäßig fest auf den Teilen 21a und 20a haftet. Die beiden Teile 21a und 20a bestehen vorzugsweise aus Glas, können jedoch auch aus Keramik oder Glaskeramik bestehen. Diese Materialien lassen es zu, daß sie nach dem Entnehmen das Amalgam durch Erhitzen von Quecksilberrückständen befreit werden.

In der Ausführungsform nach Fig. 2 sind der Behälter 20a und der Stopfen 21a im Gegensatz zur ersten Ausführungsform durch eine besondere Dichtung 32 an der Teilungsfuge 22 gegeneinander abgedichtet. Dieses Dichtungsmaterial 32 kann entweder auf der Innenwand des Behälters 20a aufgebracht sein, oder aber auf der Außenwandung des Stopfens 21a. Es kann sich um eine Dichtung aus festem Material, aus viskosem Material oder um eine Flüssigkeitsdichtung handeln. Zur sicheren Halterung der beiden Teile 20a und 21a zueinander ist im vorliegenden Ausführungsbeispiel der gesamte Mischraumkörper 1 von einer Folie 42 überzogen, die vorzugsweise eine Schrumpffolie ist. Es ist selbstverständlich auch möglich, die Haltemittel 41, 42, 43 der Ausführungsbeispiele nach Fig. 1 und 2 gegeneinander auszutauschen.

Fig. 3 zeigt nun eine Ausführungsform, bei der der Mischraumkörper 1 aus zwei gleichen Behältern 20b und 21b besteht. Diese liegen mit ihren stirnseitigen Enden an der Teilungsfuge 22 flach aufeinander. Im vorliegenden Beispiel ist die Teilungsfuge außen mit einer umlaufenden Dichtung 32 abgedichtet, die innerhalb einer umlaufenden Rille liegt. Das mechanische Zusammenhalten der beiden Teile 20b und 21b erfolgt durch eine den Bereich der Teilungsfuge 22 übergreifende Folie 41, wobei die Haltewirkung dadurch verbessert wird, daß die Ränder der beiden Behälterteile 20b und 21b je einen umlaufenden Wulst 44 aufweisen, um die sich die Folie 41 legt. Es ist selbstverständlich auch möglich, die aufeinanderliegenden Stirnflächen der beiden Teile 20b und 21b an der Teilungsfuge 22 glattflächig präzise aufeinander einzuschleifen, so daß die in diesem Beispiel gezeigte gesonderte Dichtung 32 fortfallen kann. Außerdem ist es möglich, anstelle der Folie 41 einen umgebördelten Haltering (nicht gezeigt) vorzusehen, der an den Wülsten 44 angreift und beide Teile 20b und 21b aufeinanderpreßt. Bei allen Ausführungsbeispielen ist es auch möglich und zweckmäßig, die Halte- und Dichtwirkung daduch zu verbessern, daß beim Einfüllen der Mischungsbestandteile 8 und beim Einlegen des gefüllten Folienbehälters 7 ein Vakuum angewandt wird.

Die Fig. 4 gezeigte Ausführungsform unterscheidet sich von der nach Fig. 2 dadurch, daß der Außenrand des röhrchenförmigen Behälters 20a mit einer umlaufenden Pille 45 versehen ist. Hierdurch ergibt sich ein besserer Halt der nur den Bereich der Teilungsfuge 22 überziehenden Folie 41 (entsprechend dem linken Teil der Fig. 1), weil diese weniger leicht abgleiten kann.

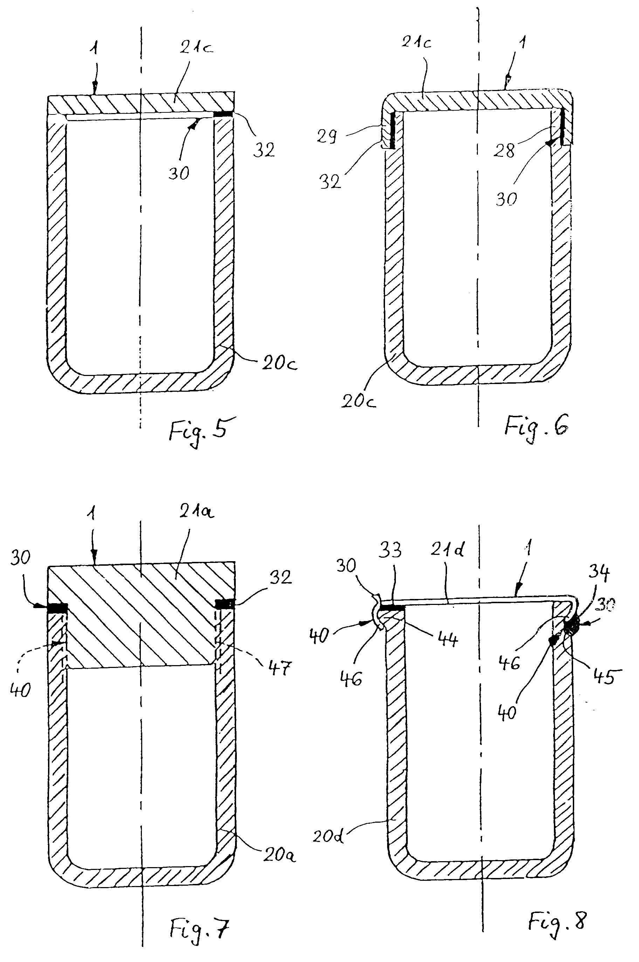

In dem Ausführungsbeispiel nach Fig. 5 besteht der Mischraumkörper 1 aus einem röhrchenförmigen Behälter 20^{o} C und einem auf der Stirnfläche des Behälters flach aufliegenden Deckel 21c. Zwischen dem Deckel 21c und den Stirnflächen des Behälters 20c ist eine ringförmige Dichtung 32 angeordnet. Diese Dichtung 32 ist zweckmäßigerweise auf die Fläche des Deckels 21c ringförmig aufgespritzt.

Fig. 6 zeigt eine Ausführungsform, ebenfalls mit einem röhrchenförmigen Behälter 20c und einem Deckel 21c. Im Gegensatz zur Ausführungsform nach Fig. 5 ist der Deckel 21c jedoch mit einem übergreifenden Rand 29 versehen, der gegenüber einem zurückgesetzten Stirnende 28 des Behälters 20c mittels einer ringförmigen Dichtung 32 abschließt. Die Dichtung 32 kann entweder am übergreifenden Rand 29 innen oder am abgesetzten Ende 28 des Behälters 20c außen angebracht sein.

Fig. 7 zeigt eine weitere Ausführungsform, ähnlich dem Beispiel nach Fig. 2, wobei der Stopfen 21a und der röhrchenförmige Behälter 20a mit je einem Gewinde 47 versehen und ineinander geschraubt sind. Die Abdichtung erfolgt mittels eines ringförmigen Dichtungsringes 32. Es ist jedoch auch möglich, Dichtungsmaterial in ein oder mehrere Gewindegänge des Gewindes 47 entweder außen oder innen anzubringen.

Bei der Ausführungsform nach Fig. 8 ist ein röhrchenförmiger Behälter 20d durch einen umgebördelten Metalldeckel verschlossen. Im linken Teil der Fig. 8 ist der Rand mit einem ringförmigen Wulst 44 versehen, der von der Umbördelung 46 des Metalldeckels 21d umgriffen wird. Als Dichtung dient eine zwischen dem Stirnende des Behälters 20d und dem Metalldeckel 21d eingebrachte Dichtung 33.

Im rechten Teil der Fig. 8 ist eine andere Variante zu sehen, bei der anstelle eines Wulstes 44 eine Rille 45 vorgesehen ist, in die die Umbördelung 46 eingreift. Die Abdichtung erfolgt bei dieser Variante durch eine in die Pille 45 eingebrachte, ringförmige umlaufende Dichtmasse 34, die das Ende der Umbördelung 46 gegenüber der Wandung des Behälters 20d in der Rille 45 abdichtet.

Während bei dem Ausführungsbeispiel nach Fig. 1 die Mischungsbestandteile 8 und der Folienbehälter 7 mit Quecksilber 6 eingezeichnet sind, so sind diese Materialien in den anderen Ausführungsbeispielen der Übersichtlichkeit und Einfachheit halber fortgelassen. Ebenso sind in den Ausführungsbeispielen nach den Fig. 5 und 6 äußere Haltemittel nicht eingezeichnet. Diese Haltemittel können sinngemäß wie in den anderen Ausführungsbeispielen ausgebildet sein, z.B. in Form einer Teilfolie 41, eine Raupe 43, einer den gesamten Mischraumkörper 1 überziehenden Folie 42 usw.

Außerdem ist es möglich, bei allen Ausführungsbeispielen, wenn auch nicht besonders erwähnt, beim Einfüllen der Materialien 6, 7, 8 ein Vakuum anzuwenden, wodurch die mechanische Halterung verbessert wird. Unter Umständen dient ein solches Vakuum auch dazu, die beiden Teile 20, 21 zunächst vorläufig in gegenseitiger Position zu halten, bis ein gesondertes Haltemittel (Folie oder dergl.) in einem zweiten Arbeitsgang aufgebracht wird. Die den Mischraumkörper 1 umschließende Folie 41, 42 kann auch gleichzeitig zum Schutz des Mischraumkörpers 1 dienen, insbesondere während des Mischvorganges in einer entsprechenden Apparatur.

Sobald der Mischvorgang abgeschlossen ist, kann durch Lösen des jeweiligen Haltemittels der Mischraumkörper 1 geöffnet und das Amalgam entnommen werden. Beide Teile 20, 21 des Mischraumkörpers 1, die hitzebeständig sind, können dann vom Restquecksilber befreit werden, und beide Teile 20, 21 können nach einer ggf. weiteren Reinigung einer Neuverwendung zugeführt werden, ohne das ein Einschmelzen erforderlich wäre. Dies ist insbesondere wichtig, wenn die Teile aus Keramik oder Glaskeramik bestehen, die nicht wieder eingeschmolzen werden können. Der im Ausführungsbeispiel nach Fig. 8 vorgesehene Metalldeckel 21d kann selbstverständlich nur dann verwendet werden, wenn die Michbestandteile das Deckelmaterial nicht angreifen. Das in den verschiedenen Ausführungsbeispielen gesondert vorhandene Dichtungsmaterial 32, 33, 34 ist entweder kaum mit dem nur beim Mischvorgang austretenden Quecksilber kontaminiert oder läßt sich wegen der geringen Menge leicht entsorgen.

In den vorliegenden Ausführungsbeispielen ist der Mischraumkörper 1 rotationssymmetrisch ausgebildet. Er ist somit auch für Mischvorrichtungen (nicht gezeigt) verwendbar, die nach dem Zentrifugalprinzip arbeiten, wobei die Rotationsachse mit der Längsachse 4 zusammenfällt. Ist der Mischraumkörper 1 anders geformt, so ist nur darauf zu achten, daß sich keine toten Ecken im Innern bilden, die Wandübergänge also abgerundet sind; in einem solchen Fallk kommen insbesondere Mischvorrichtungen nach dem Schwingungsprinzip in Frage.

## Patentansprüche

1. Mischkapsel für Dental-Amalgam mit einem länglichen, insbesondere zur Längsachse (4) rotationssymmetrischen, Mischraumkörper (1) aus hitzebeständigem Material, wie Glas, Glaskeramik oder Keramik, in dessen Mischraum einerseits Quecksilber (6) innerhalb eines Folienbehälters (7) sowie andererseits die übrigen Mischungsbestandteile (8) untergebracht sind,
dadurch gekennzeichnet,
daß der Mischraumkörper (1) aus zwei Teilen (20,21) besteht, die entlang ihrer senkrecht zur Längsachse (4) des Mischraumkörpers (1) verlaufenden Teilungsfuge (22) lösbar miteinander verbunden sind.

2. Mischkapsel nach Anspruch 1,
dadurch gekennzeichnet,
daß die beiden Teile (20, 21) an ihrer Teilungsfuge (22) durch ein Dichtungsmittel (30) gegeneinander abgedichtet sind.

3. Mischkapsel nach Anspruch 1 oder 2,
dadurch gekennzeichnet,
daß die beiden Teile (20, 21) durch lösbare Haltemittel (40) mechanisch in fester Position zueinander zusammengehalten sind.

4. Mischkapsel nach einem der vorhergehenden Ansprüche,
dadurch gekennzeichnet,
daß die beiden Teile (20, 21) an ihrer Teilungsfuge (22) durch aufeinander eingeschliffene Berührungsflächen (31) gegeneinander abgedichtet sind.

5. Mischkapsel nach Anspruch 1 bis 3,
dadurch gekennzeichnet,
daß die beiden Teile (20, 21) an ihrer Teilungsfuge (22) durch eine gesonderte Dichtung (32) gegeneinander abgedichtet sind.

6. Mischkapsel nach Anspruch 1 bis 3,
dadurch gekennzeichnet,
daß die beiden Teile (20, 21) miteinander verklebt sind.

7. Mischkapsel nach Anspruch 6,
dadurch gekennzeichnet,
daß ein wasserlöslicher Klebstoff verwendet wird.

8. Mischkapsel nach Anspruch 6 und 7,
dadurch gekennzeichnet,
daß die Verbindungsstelle zwischen den beiden Teilen (20, 21), außen von einer Folie, einer gummielastischen Raupe oder einem wasserundurchlässigen Film umgeben ist.

9. Mischkapsel nach einem der Ansprüche 1 bis 4,
dadurch gekennzeichnet,
daß die beiden Teile (20, 21) als zwei etwa gleich große an einem Ende offene Behälter (20b, 21b) ausgebildet und an den offenen Stirnseiten unter

10. Mischkapsel nach einem der Ansprüche 1 bis 4,
dadurch gekennzeichnet,
daß der erste Teil (20) als einseitig offener Behälter (20a) ausgebildet ist, in dessen Öffnung ein Stopfen (21a) als zweites Teil (21) eingesetzt ist.

11. Mischkapsel nach einem der Ansprüche 1 bis 3,
dadurch gekennzeichnet,
daß das erste Teil (20) als einseitig offener Behälter (20c) ausgebildet ist, dessen stirnseitige Öffnung durch einen stirnseitig aufliegenden Deckel (21c) verschlossen ist.

12. Mischkapsel nach Anspruch 11,
dadurch gekennzeichnet,
daß der Deckel (21c) den Rand des Behälters (20c) übergreift.

13. Mischkapsel nach einem der Ansprüche 1 bis 12,
dadurch gekennzeichnet,
daß das Haltemittel (40) eine den Bereich der Teilungsfuge (22) zwischen den beiden Teilen 20,21) übergreifende Folie (41) oder eine Halterung ist.

14. Mischkapsel nach einem der Ansprüche 1 bis 12,
dadurch gekennzeichnet,
daß das Haltemittel (40) eine den gesamten Mischraumkörper (1) umfassende Folie (42), insbesondere Schrumpffolie, ist.

15. Mischkapsel nach einem der Ansprüche 1 bis 12,
dadurch gekennzeichnet,
daß das Haltemittel (40) eine den Bereich der Teilungsfuge (22) zwischen den beiden Teilen (20,21) überspannende gummielastische Raupe (43) ist.

16. Mischkapsel nach einem der Ansprüche 1 bis 12,
dadurch gekennzeichnet,
daß die beiden Teile (20, 21) miteinander verschraubt sind.

17. Mischkapsel nach den Ansprüchen 11 und 12,
dadurch gekennzeichnet,
daß als zweiter Teil (21) ein flexibler Metalldeckel (21d) vorgesehen ist, der auf dem ersten Teil (20) von außen umgebördelt ist.

18. Mischkapsel nach Anspruch 17,
dadurch gekennzeichnet,
daß der Metalldeckel (21d) mit einer Aufreißlasche versehen ist.

19. Mischkapsel nach Anspruch 17 oder 18,
gekennzeichnet durch eine im Randbereich des Metalldeckels aufgespritzte Dichtmasse (33).

20. Mischkapsel nach Anspruch 17 oder 18,
gekennzeichnet durch eine im Bereich der Umbördelung (46) des Metalldeckels (21d) nach Verschließen außen aufgespritzte Dichtmasse (34).

21. Mischkapsel nach einem der vorstehenden Ansprüche,
dadurch gekennzeichnet,
daß der Innenraum des Mischraumkörper (1) unter Unterdruck steht.
